# EUROPEAN PATENT APPLICATION

(11) **EP 4 703 295 A1**
(43) Date of publication of application: **04.03.2026**
(21) Application number: 24197525.9
(22) Date of filing: 30.08.2024
(51) Int. Cl.: B65G 1/04

(54) **AN INTERFACE ASSEMBLY FOR A RESIDENTIAL STORAGE AND RETRIEVAL SYSTEM**

(71) Applicant: BAULIN Innovation ApS, 8541 Skødstrup (DK)
(72) Inventor: Ladegaard Baun, Torben, 8541 Skødstrup (DK); Skaarup Lindner, Rasmus, 8541 Skødstrup (DK)
(74) Representative: Ström & Gulliksson AB

(57) **Abstract**

The present invention relates to an interface assembly for a storage and retrieval system, comprising an elevating device, a storage part, and an intermediate part being connected with the elevating device, the elevating device being configured to elevate the intermediate part in a vertical direction, the intermediate part comprising releasable locking means, the locking means being configured to releasable engage receiving means connected with the storage part whereby the elevating device via the intermediate part can move the storage part in the vertical direction.

## Description

The present disclosure relates to an interface assembly for a residential storage and retrieval system, a residential storage and retrieval system and a building comprising the residential storage and retrieval system.

Existing storage and retrieval systems primarily focus on industrial or large-scale applications. These systems often involve complex framework structures, extensive rail systems, and container handling vehicles. One major disadvantage of these systems is their bulky and space-consuming design, which makes them impractical for installation where space efficiency is crucial. The rail systems and container handling vehicles require significant overhead space and structural modifications, which may not be present.

Another significant drawback is their lack of user-friendly interfaces tailored for not professional use. Industrial systems are designed for operation by trained personnel and often involve complex controls and interfaces that are not intuitive for the average user. Furthermore, the maintenance requirements for these systems can be cumbersome and costly.

The bulkiness, complexity, maintenance demands, lack of user-friendly interfaces, and inadequate vertical adaptability of current systems present significant barriers to their adoption in residential settings. There is a clear need for a more refined solution that addresses these challenges and provides a practical, efficient, and user-friendly storage and retrieval system for home use.

It is an object of the present invention to wholly or partly overcome the above disadvantages and drawbacks of the prior art. More specifically, it is an object to provide an interface assembly for a residential storage and retrieval system for storage and handling of storage parts in an easy manner.

The above objects, together with numerous other objects, advantages and features, which will become evident from the below description, are accomplished by a solution in accordance with the present invention by an interface assembly for a residential storage and retrieval system, comprising an elevating device, a storage part, and an intermediate part being connected with the elevating device, the elevating device being configured to elevate the intermediate part in a vertical direction, the intermediate part comprising releasable locking means, the locking means being configured to releasable engage receiving means connected with the storage part whereby the elevating device via the intermediate part can move the storage part in the vertical direction. This design ensures efficient use of space, secure access, and adaptability to various home layouts.

Furthermore, the intermediate part may comprise a plurality of locking means.

Moreover, the locking means may comprise a pin configured to be movable inserted into the receiving means.

In addition, the pin may be moved by an actuator, a motor, a lever arm, a gear system, or a cylinder.

Also, the storage part may comprise an identification unit, such as a RFID tag, a chip, a barcode, such as a QR code, or similar.

The present invention also relates to a residential storage and retrieval system comprising the interface assembly as described above.

Additionally, the elevation device may be connected with a wagon.

Furthermore, the wagon may have legs, each leg may be connected with a wagon wheel.

Moreover, at least one wagon wheel may be configured to be driveable by a wagon motor.

Also, the elevation device may be movable arranged to the wagon so that the elevation device can be moved in a vertical direction in relation to the chassis.

The wagon may also comprise a lifting unit configured to lift and lower the elevation device so that a storage part can be lifted/lowered together with the elevation device.

In addition, a control unit may be arranged in connection with the system.

Also, an access module may be provided, the access module is operatively connected with the control unit.

The system may also comprise one or more retrieval stations.

The present invention also relates to a building having a storage room comprising the residential storage and retrieval system as described above.

Additional features and advantages are disclosed in the following description, claims, and drawings, and in part will be readily apparent therefrom to those skilled in the art or recognized by practicing the disclosure as described herein.

The disclosure and its many advantages will be described in more detail below with reference to the accompanying schematic drawings, which for the purpose of illustration show some non-limiting examples and in which
Fig. 1 shows an interface assembly according to the invention,
Figs. 2- 3 show the locking means disengaged from receiving means and engaged with receiving means, respectively,
Figs. 4-6 show an embodiment of a wagon,
Figs. 7-8 show alignment of the intermediate part in relation with the storage part,
Figs. 9a-9h show a sequence of stacking/unstacking storage parts,
Figs. 10a-10e show a sequence of movement of the lifting device,
Fig. 11 shows another embodiment of the wagon,
Fig. 12 shows yet another embodiment of the wagon,
Figs. 13a-13e show different components of the wagon,
Figs. 14a-14b show other components of the wagon,
Figs. 15a-15b show an embodiment of a hatch,
Figs. 16a-16b show another embodiment of the hatch,
Figs. 17a-17e show an embodiment of a residential storage and retrieval system,
Figs. 18a-18b show a building with the residential storage and retrieval system,
Fig. 19 shows an embodiment of a retrieval station,
Fig. 20 show another embodiment of a residential storage and retrieval system,
Figs. 21a-21d show a sequence of retrieving and storing a storage part in the residential storage and retrieval system of Fig. 20.

All the figures are highly schematic and not necessarily to scale, and they show only those parts which are necessary in order to elucidate the disclosure, other parts being omitted or merely suggested.

In contemporary urban living, efficient use of space has become a paramount concern, particularly in residential settings where space is often at a premium. With the increasing trend towards compact living environments, the need for optimized storage solutions has grown significantly.

Additionally, existing systems do not provide the flexibility needed for multi-level or vertically-oriented storage solutions that are ideal for maximizing space in homes. While some systems offer vertical storage capabilities, they often lack the necessary adaptability to seamlessly integrate with different floor plans and room configurations found in residential buildings. This limitation hinders the efficient use of vertical space, which is a key aspect of optimizing storage in compact living environments.

Moreover, security and accessibility are critical concerns in domestic settings. Prior art systems typically do not offer robust mechanisms for ensuring that only authorized users can access stored items. This can be a significant drawback in homes with multiple occupants or in shared living spaces, where secure and personalized access to storage is essential.

This present invention aims to address the limitations of existing systems by focusing on a compact, efficient, and user-friendly design, so as to provide a practical and automated solution for optimizing storage in residential settings.

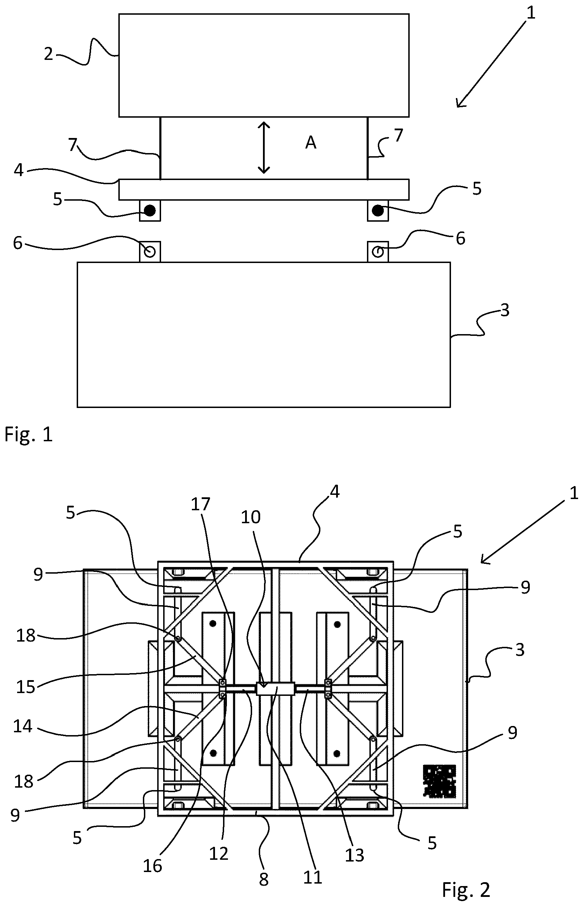

Fig. 1 shows an interface assembly 1 for a residential storage and retrieval system 100, comprising an elevating device 2, a storage part 3, and an intermediate part being connected with the elevating device 2. The elevating device 2 being configured to elevate the intermediate part 4 in a vertical direction as shown with arrow A. The intermediate part 4 comprises releasable locking means 5, the locking means 5 being configured to releasable engage receiving means 6 connected with the storage part 3 whereby the elevating device 2 via the intermediate part 4 can move the storage part 3 in the vertical direction when the locking means 5 are engaged with the receiving means 6. Hoisting lines 7 extend from the elevating device 2 to the intermediate part 4 so that the intermediate part can be moved in vertical direction facilitating bringing the locking means 5 into engagement with the receiving means 6 as well as via the connection between the locking means and the receiving means lifting and lowering the storage part 3. When the locking means are disengaged from the receiving means the elevating device 2 may move the intermediate part away from storage part 3.

The intermediate part 4 may comprise a plurality of locking means 5. A technical advantage may include increased stability and secure attachment of the storage part 3 during vertical movement, reducing the risk of dislodgement.

As seen in Fig. 2, the intermediate part 4 may comprise a frame structure 8. A technical advantage may include enhanced structural integrity and support, allowing for the safe and efficient transfer of storage parts. In the shown embodiment, the frame structure 8 is square-formed. A technical advantage may include providing uniform distribution of stress and load, which can improve the durability and reliability of the assembly. However, in other embodiments it may have another geometrical shape such as round, elliptic, H-formed, etc. The frame structure 8 may be made of metal or a composite or any combination thereof. A technical advantage may include offering a robust and lightweight structure, balancing strength and ease of handling.

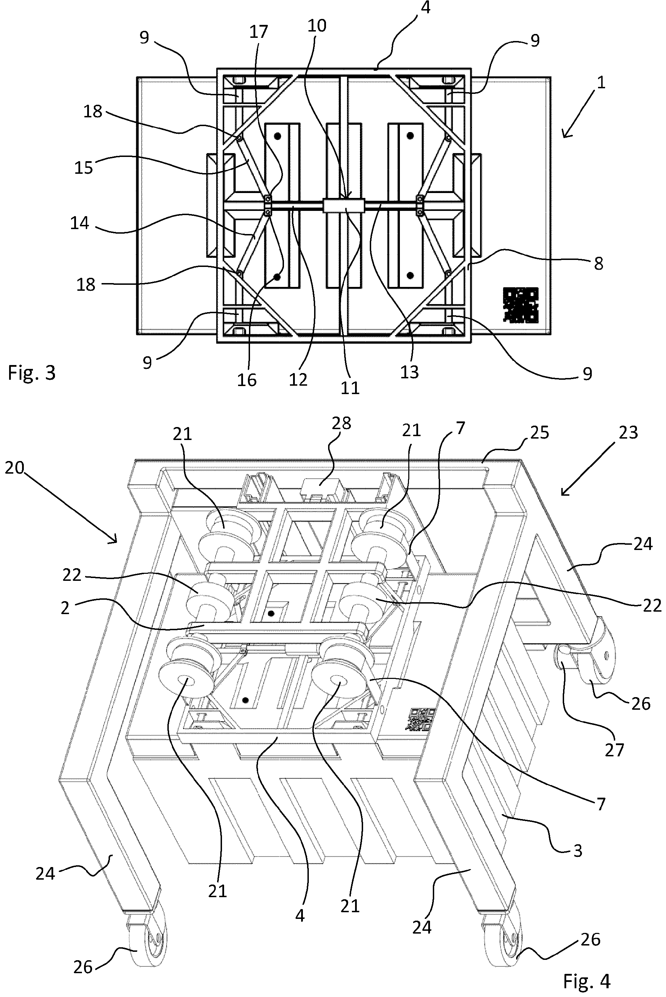

In the present embodiment, a locking means 5 is arranged at each corner of the square-formed frame structure 8. A technical advantage may include ensuring even and secure locking at multiple points, enhancing the overall stability when lifting. The locking means 5 may comprise a pin 9 configured to be movable inserted into the receiving means. A technical advantage may include providing a simple yet effective mechanism for securing the storage part, ensuring reliable engagement. The pin 9 may be moved by an actuator 10, a motor, a lever arm, a gear system, or a cylinder. A technical advantage may include offering various options for automated and manual operation, enhancing the flexibility and adaptability of the system. In the present embodiment, the actuator 10 comprises movable element 11. The movable element 11 is configured to move a first bar 12 and a second bar 13 forth and back. The first bar 12 is connected with a first bar part 14 and a second bar part 15 via a first joint 16 and a second joint 17. In the opposite ends of the first bar part 14 and the second bar part 15 compared to the first joint and the second joint, the first bar part and the second bar part are connected with each pin 5 via pin joints 18. Hence, when the movable element 11 is moved the pins 5 may be moved from a disengaged position as shown in Fig. 2, to an engaged position as shown in Fig. 3.

As mentioned above, the locking means may comprise a mechanical locking means. In another example, the locking means may comprise a magnetic locking means, or a vacuum locking means, or any combination thereof.

Furthermore, the intermediate part 4 may comprise one or more connection points for one or more hoisting lines 7. A technical advantage may include facilitating the attachment and movement of the storage part, ensuring smooth and controlled vertical transitions.

Moreover, the receiving means 6 may be connected with the storage part 3. A technical advantage may include ensuring a secure and stable attachment, preventing accidental disconnection during movement. A plurality of receiving means 6 may be connected with the storage part 3. A technical advantage may include providing multiple points of engagement, enhancing the overall stability and security of the system.

Advantageously, the number of receiving means 6 equal the number of locking means 5. A technical advantage may include ensuring a precise and balanced engagement, optimizing the stability and integrity of the assembly.

In another example, the number of receiving means is higher than the number of locking means so that it is possible to engage the storage part in different position, if, for instance, the storing part has an uneven weight distribution, or during other circumstances.

In the present embodiment, the receiving means 6 is an opening as seen in Fig.l. A technical advantage may include offering a straightforward and reliable method for engaging the locking means, simplifying the design and operation.

In other examples, the receiving means may comprise a magnetic material, or one or more face(s) enabling that vacuum unit may be engaged.

A compressor or air pump may be arranged for cleaning the top surface of the storage part, if dust or other debris are present on the top surface. This may be relevant when connecting the locking means and the receiving means, but also in circumstances where it may be difficult to identify a storage part. In such a circumstance, the compressor or air pump may remove dust, etc. from the top surface so that an identification of the specific storage part is facilitated.

Also, the receiving means 6 may be directly connected with the storage part 3. A technical advantage may include reducing the complexity of the assembly, ensuring a direct and secure attachment. In another example, the receiving means 6 may be embedded into the storage part 3. A technical advantage may include protecting the receiving means from external damage, enhancing the durability and longevity of the system.

Advantageously, the receiving means 6 may be projecting in an upwards direction in relation to the storage part 3. A technical advantage may include facilitating easy engagement with the locking means, ensuring a secure connection.

In Figs. 4-6, an embodiment of a wagon 20 of the residential system is shown. The elevating device 2 is arranged on the wagon 20. The elevating device 2 may comprise one or more motor(s) 22 for lifting the storage part 3. The motor(s) 22 is/are configured to rotate one or more pulleys 21. A technical advantage may include providing a reliable and efficient mechanism for lifting and lowering the storage part, enhancing the performance of the system. The hoisting lines 7 extend from the pulleys 21 to the connection points of the intermediate part 4. A technical advantage may include ensuring smooth and controlled vertical movement, reducing the risk of jerks and instability. The hoisting lines 7 may be wires, ropes, belts, webbings or the like. A technical advantage may include offering various options for flexible and durable hoisting solutions, suitable for different load requirements.

The pulleys 21 may have a straight configuration or a conical configuration. A technical advantage may include providing flexibility in the design and operation of the elevating mechanism, optimizing performance as well as alignment.

In an embodiment, the elevating device 2 comprises a load sensor for detecting a load of the storage part 3. A technical advantage may include ensuring safe and efficient operation by monitoring the load, preventing overloading and potential damage. The load sensor may be configured to detect if the load is larger than a predetermined load. A technical advantage may include providing an additional safety measure, ensuring that the system operates within safe load limits. The predetermined load may be 500 kg, 250 kg, 200 kg, 100 kg, or lower. A technical advantage may include offering customizable load limits to suit different applications and requirements, enhancing the versatility of the system. The load sensor may also be configured to detect a load distribution of the storage part so that the elevating device 2 may be controlled accordingly.

In addition, the one or more motors 22 may be electric motors. A technical advantage may include providing an efficient and eco-friendly power source, reducing energy consumption and environmental impact.

Furthermore, the elevating device 2 may comprise one or more device sensor(s) for detecting a distance to the storage part 3 and/or a position of the intermediate part 4 in relation to the storage part 3 or vice versa. A technical advantage may include ensuring precise and accurate movement so that the locking means may be aligned for engagement with the receiving means.

The wagon may comprise a chassis 23 connected with at least three legs. In Figs. 4-6 the wagon 20 has four legs 24. A technical advantage may include providing a stable and robust support structure, ensuring safe and reliable operation. The chassis 23 comprises a frame wagon structure 25 configured to carry the elevation device 2. A technical advantage may include offering a secure and stable mounting point for the elevation device, optimizing performance. In the embodiment of Figs. 4-6 the different legs 24 are connected via the frame wagon structure 25 so that a rigid and firm structure is obtained so that the wagon 20 can withstand the any movements from the load and at the same time have sufficient rigidity to be moved around without flexing.

The legs 24 have a height, the height being lower than 1,5 meter. A technical advantage may include enabling compact and space-efficient design, suitable for residential environments. The wagon 20 may have a wagon height being lower than 2 meters, preferably lower so that the wagon may operate in confined areas having limited height such as for instance an attic of a house.

Each leg 24 is connected with a wagon wheel 26. A technical advantage may include facilitating smooth and efficient movement of the wagon 20, reducing friction and wear. The wagon wheels 26 may be rotatable connected with the legs 24. Each wagon wheel 26 may be made of a polymeric material, a rubber material or some other elastic material. The wagon wheels 26 may also comprise a surface coated with rubber or similar material. At least one wagon wheel 26 is configured to be driveable by a wagon motor 27. A technical advantage may include enabling automated movement of the wagon, reducing the need for manual intervention. In the embodiment shown in Figs. 4-6 two wagon wheels 26 are driveable with the wagon motors 27. A technical advantage may include providing enhanced mobility and maneuverability, optimizing the performance of the wagon. In other embodiments only one wagon wheel is driveable and yet another embodiment three or four wagon wheels are driveable. The wagon 20 may be an autonomous wagon. A technical advantage may include enabling fully automated storage and retrieval, enhancing efficiency and convenience. Furthermore, the elevating device 2 is arranged above the wagon wheels 26. A technical advantage may include optimizing the center of gravity and stability of the system, enhancing safety and performance.

The wagon 20 is configured to be moved along a path and/or is configured to be moved and/or turned in any direction in a horizontal plane. A technical advantage may include offering flexible and precise movement, optimizing the accessibility and efficiency of the system.

The wagon is configured to be movable on a floor or platform.

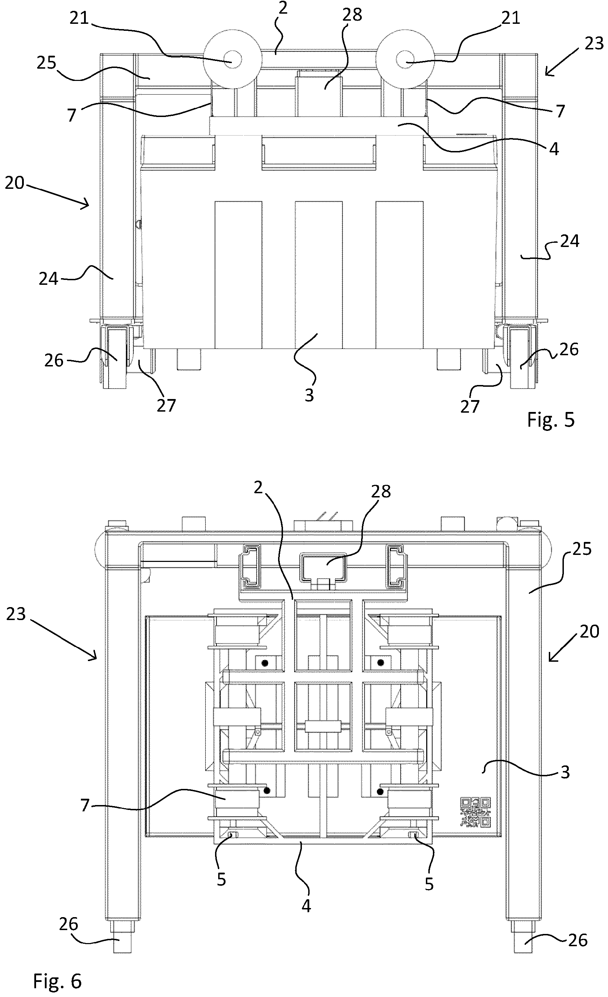

In Fig. 4, the wagon 20 is shown in a perspective view. In Fig. 5, the wagon 20 is shown in a side view, and in Fig. 6, the wagon 20 is shown in top view. In all views, the elevating device 2 is lifting a storage part 3 via the intermediate part 4. The chassis 23 and the frame wagon structure 25 are designed so that the storage part 3 may be handled inside the frame wagon structure 25. The wagon 20 is configured to lift and transport the storage part 3. In circumstances where the storage part 3 has a larger width than a width of the frame wagon structure 25, the wagon 20 is configured to move along the width of the storage part 3. Hence, in such a situation the storage part 3 may project outside the frame wagon structure 25.

Moreover, the elevation device 2 may be movable arranged to the wagon 20 so that the elevation device 2 can be moved in a vertical direction in relation to the chassis 23. A technical advantage may include providing flexible and precise vertical movement, optimizing the storage and retrieval process. In addition, it may be possible to stack the storage parts 3 on top of each other. The wagon 20 comprises a lifting unit 28 configured to lift and lower the elevation device 2 so that a storage part 3 can be lifted/lowered together with the elevation device 2. A technical advantage may include enabling efficient and controlled lifting and lowering, enhancing the performance of the system. The lifting unit 28 may comprise a unit motor, a toothed gearing system, a hydraulic cylinder, a pneumatic cylinder, a belt drive or the like. A technical advantage may include offering various options for reliable and efficient lifting mechanisms, suitable for different load requirements. A high flexibility of handling the storage parts are obtained.

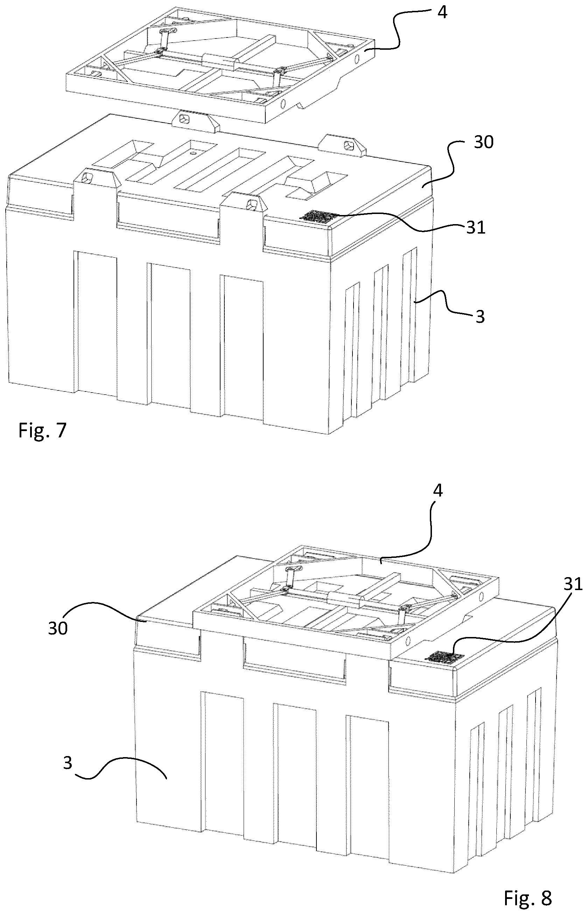

In Figs.7 and 8, the storage part 3 and intermediate part 4 are shown in relation with each other. In Fig. 7, the intermediate part 4 is positioned in a distance above the storage part 3 and in Fig. 8 the intermediate part 4 is locked to the storage part 3 via the locking means being engaged with the receiving means as described above.

The storage part is a box having an internal volume. A technical advantage may include providing a versatile and spacious storage solution, suitable for a wide range of items. The internal volume and thereby size of the storage part may vary and the system may be configured to handle different sizes and loads of the storage parts.

In the present embodiment, the storage part 3 is square-formed having a length, a width and a height. In other embodiments, the storage part may have other geometrically shapes. The box 3 has a lid 30 closing off the internal volume. A technical advantage may include protecting the stored items from dust, dirt, and other environmental factors, maintaining their condition. The may be arranged a lock so that the lid 30 is securely locked. The lock may be an electric lock or a normal lock.

In another embodiment, the storage part 3 may be a tray. A technical advantage may include enabling easy access and retrieval of items, particularly for smaller or frequently used objects. In addition, it may be possible to position high objects on the tray that cannot fit into the box.

The storage part may be made of a polymeric material. A technical advantage may include offering a lightweight and durable storage solution, resistant to corrosion and wear. The storage part may also be made of metal, a composite, cardboard, wood, or any other suitable material.

Also, the storage part 3 may comprise an identification unit 31. A technical advantage may include enabling easy tracking and management of stored items, enhancing the organization and accessibility of the storage system. The identification unit 31 may be a RFID tag, a chip, a barcode, such as a QR code, or similar. A technical advantage may include providing various options for automated identification and tracking, improving efficiency and accuracy. Also, the storage part 3 may comprise a projecting area or sign. A technical advantage may include facilitating easy identification and retrieval of the storage part, enhancing user convenience.

Furthermore, the intermediate part 4 may comprise one or more part sensor(s) for detecting a distance to the storage part and/or a position of the intermediate part in relation to the storage part, or vice versa. A technical advantage may include ensuring precise movement and positioning, reducing the risk of errors and collisions.

In another embodiment, the storage part 3 may be isolated. A technical advantage may include protecting sensitive items from environmental factors, such as temperature and humidity, maintaining their condition. The storage part 3 may also comprise a vent opening. A technical advantage may include allowing for air circulation, preventing the buildup of moisture and odors.

Moreover, the storage part 3 may comprise a device for controlling parameters of the internal volume. A technical advantage may include enabling the storage of items that require specific environmental conditions, such as temperature or humidity control. The parameters may be humidity, temperature, pressure or similar. A technical advantage may include providing a customizable storage environment, suitable for a wide range of items with varying storage needs.

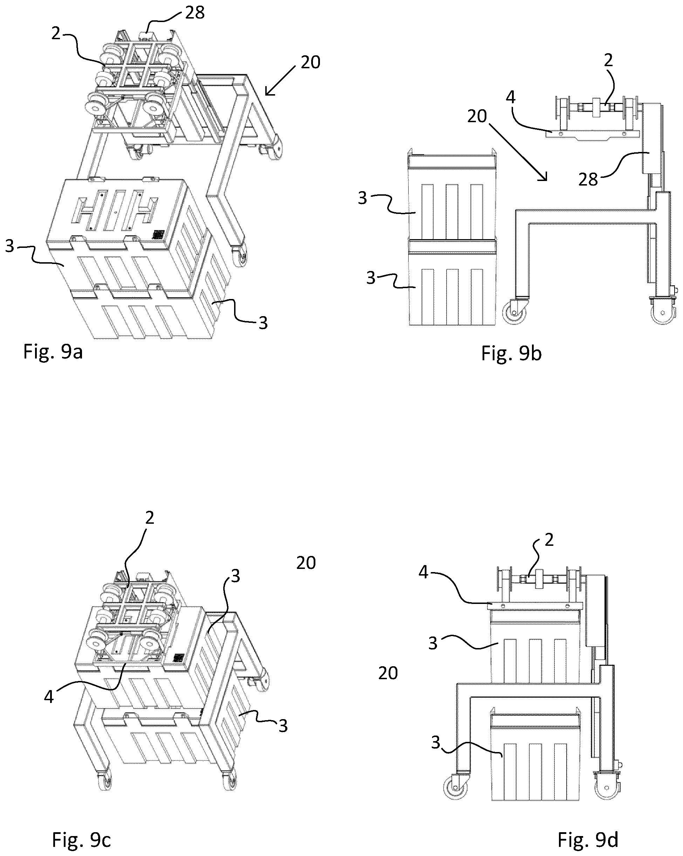

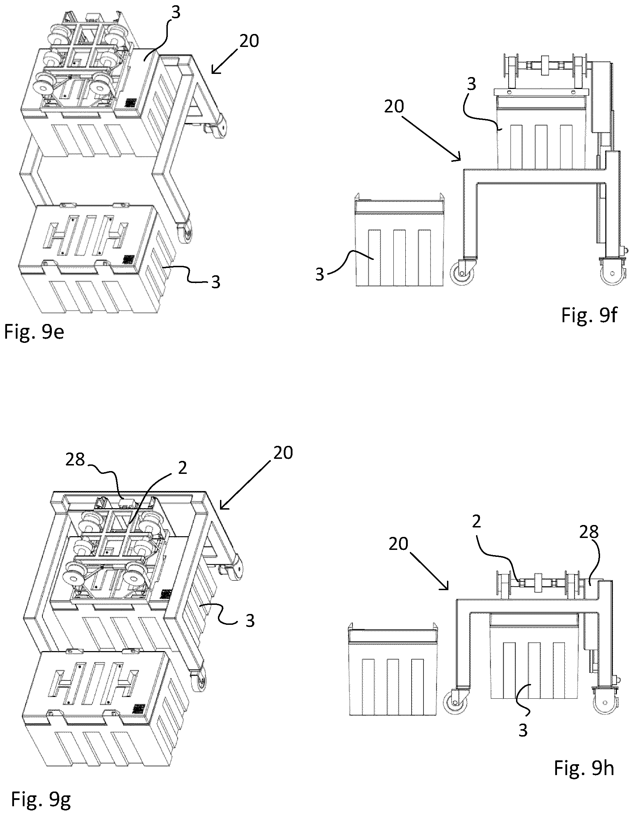

In Figs. 9a-9h, a sequence of destacking a storage part 3 by the use of the wagon 20 as described above, is shown. Figs. 9a, 9c, 9e and 9g show the storage parts 3 and the wagon 20 in perspective, and Figs. 9b, 9d, 9f and 9h show the storage parts 3 and the wagon in a side view. Figs. 9a and 9b show the same situation, Figs. 9c and 9d show the same situation and so on.

In Figs. 9a and 9b, two storage parts 3 are stacked. The wagon 20 is offset the stacked storage parts 3. The lifting unit 28 has been lifted in a vertical direction above the wagon 20 so that the elevating device 2 and the intermediate part 4 are in a position above the height of the stacked storage parts 3.

In Figs. 9c and 9d, the wagon 20 has been moved so that the storage parts 3 are positioned within the perimeters of the wagon 20. The intermediate part 4 has been lowered so that the locking means are engaging the receiving means of the top storage part 3 and hereinafter, the elevating device has hoisted the top storage part 3 so that it is separated from the lower storage part 3.

In Figs. 9e and 9f, the wagon 20 has been moved away from the lower storage part 3 while the top storage part 3 is positioned in an elevated position so that it not will hit the lower storage part 3 while being moved.

In Figs. 9g and 9h, the lifting unit 28 has lowered the elevating device 2 and thereby also the storage part 3 so that the wagon 20 may be moved towards a retrieval station.

The sequence showed in Figs. 9a-9h relates to a destacking of two storage parts 3, however, the opposite sequence may also be feasible showing how to stack a storage part 3 onto another storage part 3.

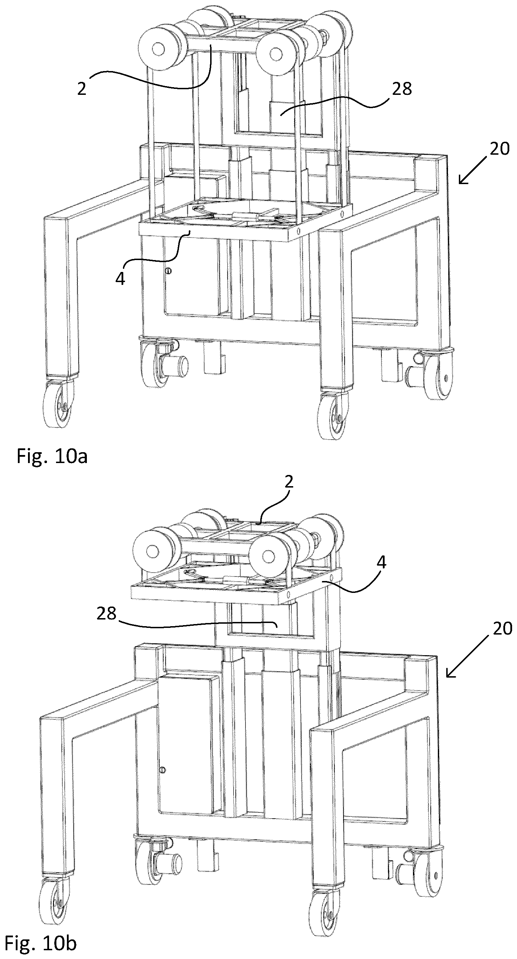

In Figs. 10a-10e, different views of lifting and lowering the elevating device 2 and the intermediate part 4 are shown. The elevating device 2 are arranged in connection with the wagon as described above.

In Fig. 10a, the lifting unit 28 has hoisted the elevating device 2 to a position above the wagon 20. The intermediate part 4 is also being hoisted by the elevating device 2. In Fig. 10b, the intermediate part 4 has been hoisted to a position just below the elevating device 2.

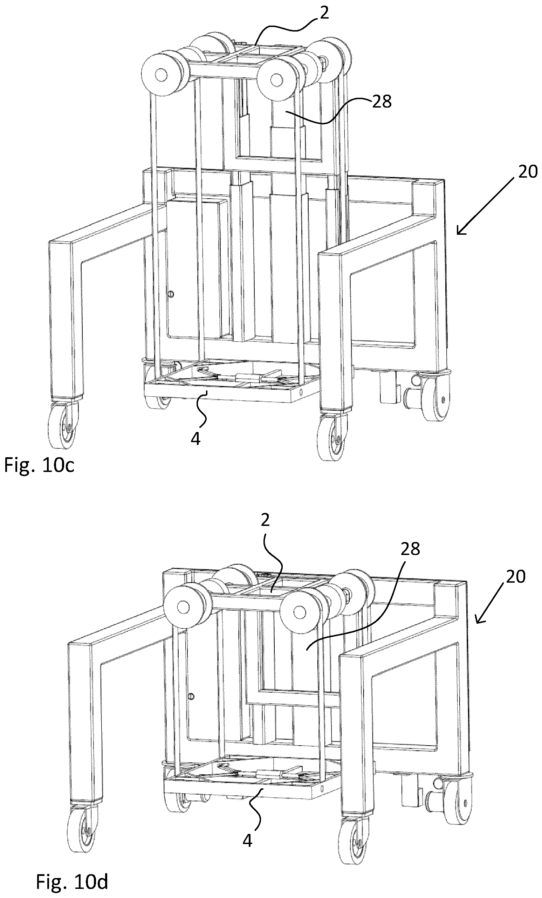

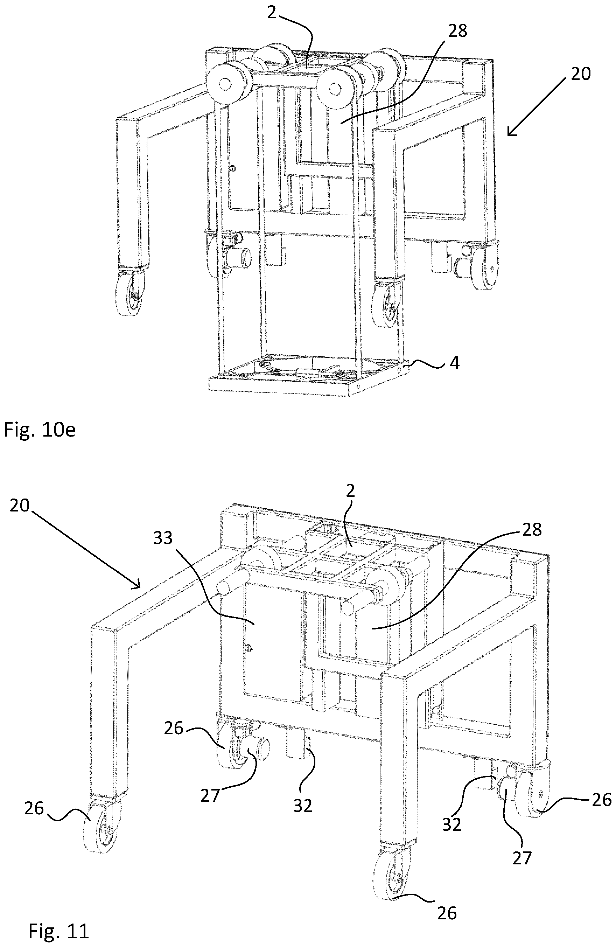

In Fig. 10c, the elevating device 2 has lowered the intermediate part 4 while still being positioned above the wagon 20. In Fig. 10d, the lifting unit 28 has lowered the elevating device 2 while the intermediate part 4 is positioned in the same position as in Fig. 10c. In Fig. 10e, the elevating device 2 has lowered the intermediate part 4 even further to a position below the wagon 20.

The elevating device 2 and the lifting unit 28 may be controlled independently so that the intermediate part 4 may be positioned in the same position while the lifting unit hoist or lower the elevating device 2. The intermediate part 4 may also be moved together with the elevating device 2 so that the distance between the elevating device 2 and the intermediate part 4 remains the same.

In Fig. 11, the wagon 20 is show in a perspective view. The wagon 20 is similar to the one described in relation to Figs. 4-6. The wagon also comprises a wagon sensor 32, the wagon sensor 32 is configured to detect a position of the wagon. A technical advantage may include providing precise and accurate positioning, enhancing the efficiency and reliability of the system. In the embodiment, the wagon 20 comprises two wagon sensors 32. The wagon sensor 32 is an imagining sensor, such a camera, or a LiDAR sensor, or other sensors. A technical advantage may include offering advanced and accurate sensing capabilities, optimizing the performance and safety of the system.

Furthermore, the wagon motor 27 and the unit motor is an electric motor. A technical advantage may include providing an efficient and eco-friendly power source, reducing energy consumption and environmental impact. The wagon 20 may also comprise a power supply, such as a rechargeable battery 33. A technical advantage may include ensuring continuous and reliable operation, reducing downtime and maintenance requirements.

Also, a wagon charging station may be arranged so that the wagon can be recharged. A technical advantage may include providing a convenient and efficient method for recharging the wagon, ensuring uninterrupted operation.

In addition, a control unit may be arranged. A technical advantage may include offering centralized control and monitoring, enhancing the efficiency and reliability of the system. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit is operatively connected with the elevating device 2, the storage part 3, the locking means 5, any of the sensors, any of the motors. A technical advantage may include providing integrated and coordinated operation, optimizing the performance and efficiency of the system.

The elevating device 2 may comprise one or more motor(s). A technical advantage may include enabling automated and efficient vertical movement. As mentioned above, the motor(s) is/are configured to rotate one or more pulleys. A technical advantage may include providing a reliable and efficient mechanism for lifting and lowering the storage part, enhancing the performance of the system.

Also, as mentioned, the elevating device 2 may comprise one or more device sensor(s) for detecting a distance to the storage part and/or a position of the intermediate part in relation to the storage part or vice versa. The device sensors may be an imagining sensor, such a camera, or a LiDAR sensor, or other sensors.

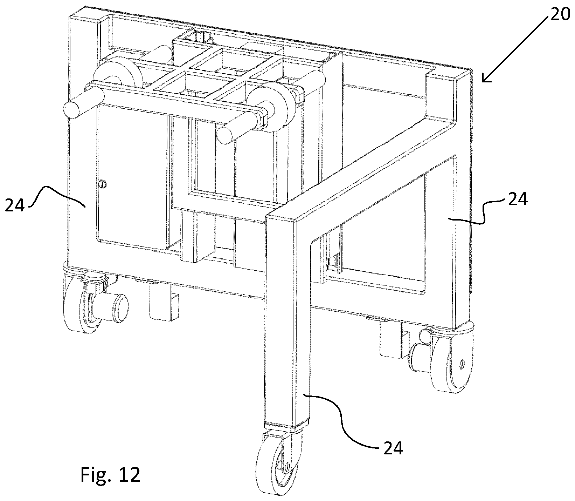

In Fig. 12, another embodiment of the wagon 20 is shown. The wagon correspond to the wagon 20 described above, however, in the present embodiment the wagon has three legs 24 instead of four.

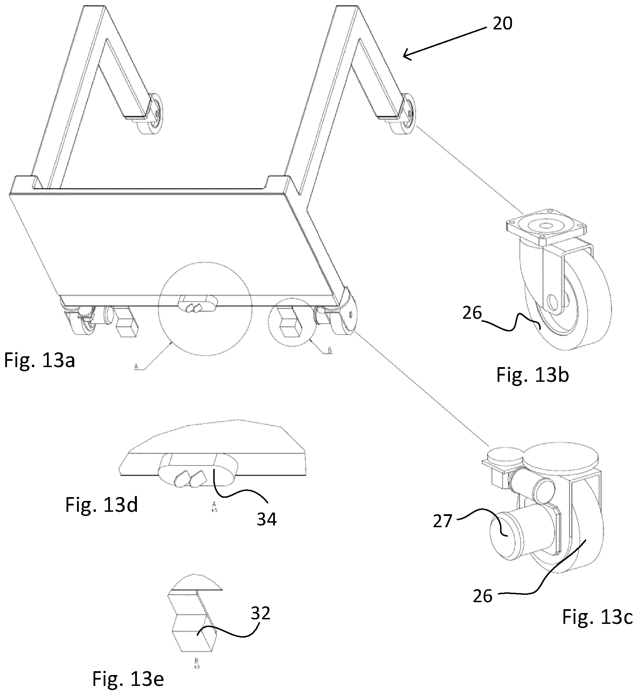

In Figs. 13a, the wagon 20 is shown from a back side. Figs. 13b-13e show different components of wagon. In Figs. 13b, the wagon wheel 26 without a motor. In Fig. 13c, the wagon wheel 26 is drivable via the wagon motor 27. Fig. 13d shows shows a charge interface 34. The charge interface 34 is configured to connect with a charger (not shown) so that the rechargeable battery can be recharged. Fig. 13e show an example of the wagon sensor 32.

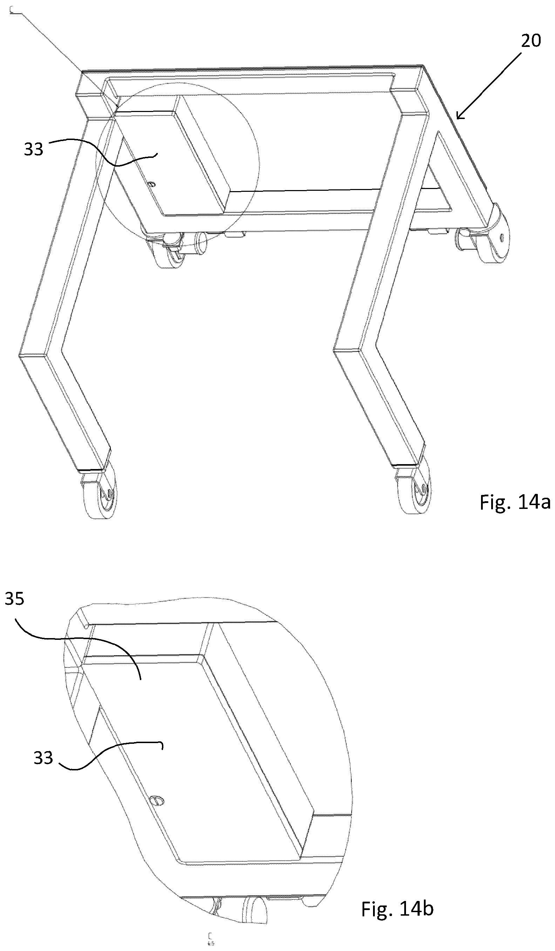

In Figs. 14a-14b, the wagon 20 and the battery 33 are shown. The battery 33 may be arranged inside a battery box 35 for protecting the battery. The battery 33 may be monitored inside the battery box 35.

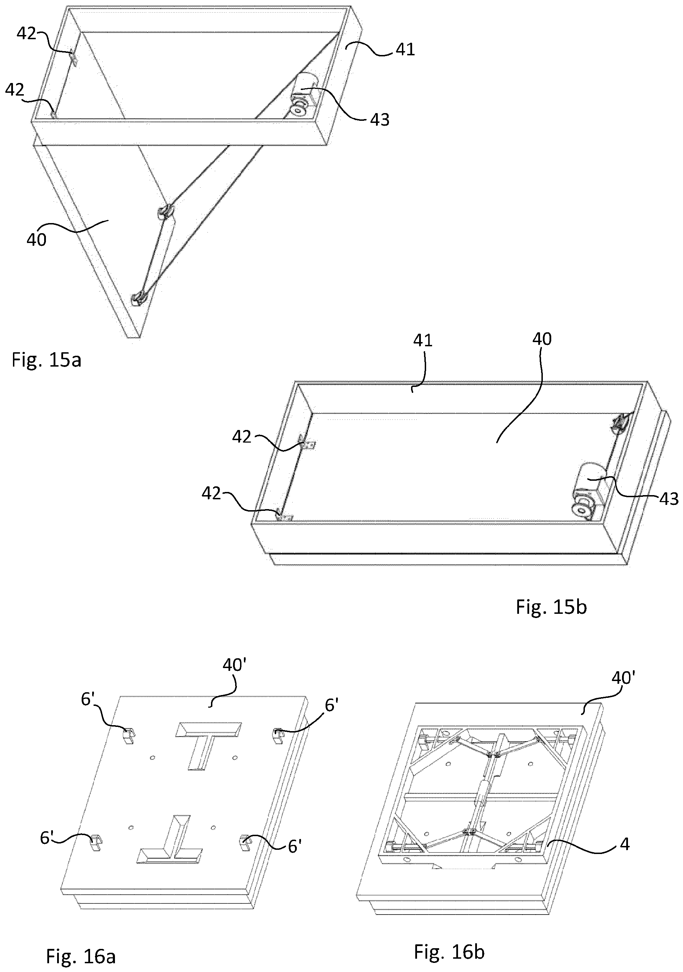

Figs. 15a-15b show an example of a hatch 40. The hatch 40 may be mounted in normal manner in a ceiling of a house. The hatch 40 is connected to a hatch frame 41 via two hinges 42. The hatch may have a closed position as shown in Fig. 15a and an open position as shown in Fig. 15b. In connection with the hatch frame 41 a hatch motor 43 is arranged. The hatch motor 43 is configured to open and close the hatch 40 on demand. In another example, the hatch may be opened or closed by other moving means, such as for instance a linear actuator or cylinder. The hatch 41 may be used to a retrieval station. In addition, the hatch motor 43 may be operatively connected with the control unit.

In Figs. 16a-16b, another example of a hatch 40' is shown. The hatch 40' comprises a number of hatch receiving means 6'. The hatch receiving means 6' are configured to receive the locking means of the intermediate part 4 as shown in Fig. 16b. Hence, when the hatch 40' shall be opened the wagon may be moved into position above the hatch 40' wherein after the wagon, elevating device and the intermediate part are aligned in relation to the hatch receiving means 6' so that the intermediate part 4 is brought into position so that the locking means can be engaged with the hatch receiving means 6'. When the locking means are engaged and locked the elevating device can hoist the hatch 40' from the hatch frame (not shown) and placed in a position therefrom so that access is provided through the hatch frame. Hereinafter, the open hatch 40' may be used as a retrieval station for the storage parts (not shown). The hatch 40' may be subsequently be rearranged on the hatch frame so that the hatch 40' close off the retrieval station.

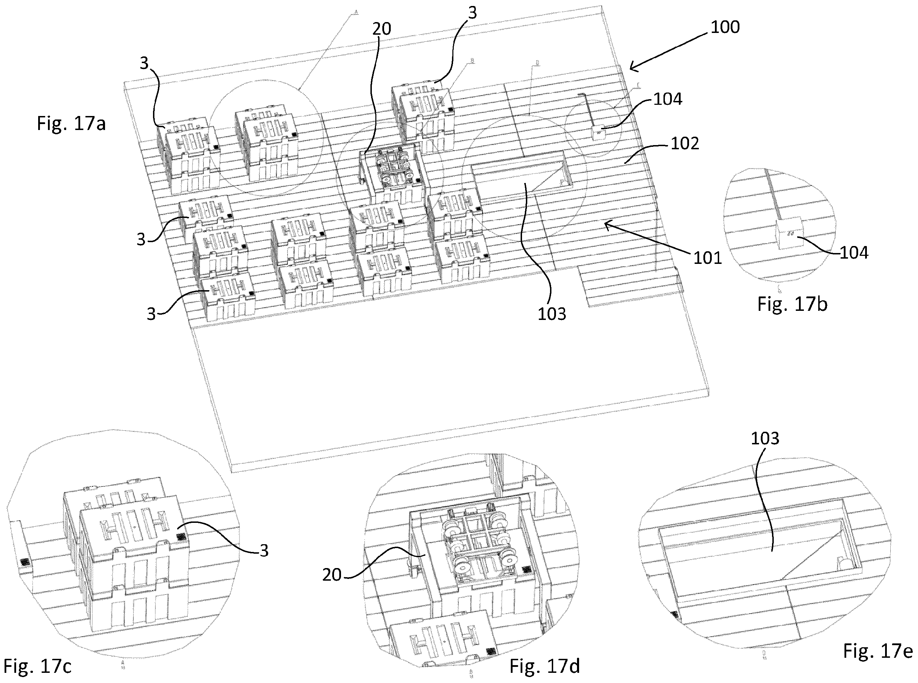

In Figs. 17a-17e, a residential storage and retrieval system 100 comprising the interface assembly as described above is shown. The residential storage and retrieval system 100 is in an example arranged in an attic 101 of a building. A number of storage parts 3 are stored in different position of a floor 102 of the attic 101. Some of the storage parts 3 are stacked. In the floor 102 of the attic, a retrieval station 103 is arranged so that the storage parts 3 may be retrieved through the retrieval station 103.

The residential storage and retrieval system 100 comprises a wagon 20 supporting and moving the interface assembly. The wagon 20 is moved around on the floor positioning the storage parts 3 when received via the retrieval station 103. The wagon 20 communicates with the control unit so that a position of a specific storage part 3 is stored in a memory of the control unit so that it may be retrieved again on the demand. In Fig. 17b, the charger 104 is shown. The charger is configured to charge the battery of the wagon when not in use. The wagon is configured to move itself to the charger 104 when not in use. The retrieval station 103 correspond to the hatch system as described in connection with Figs. 15a-15b. The retrieval station 103 has a station width being smaller than the width of the wagon 20 so that the legs of the wagon 20 can be on each side of the retrieval station. Preferably, the retrieval station 103 is larger than the dimensions of the storage parts. Fig. 17d shows the wagon 20 and the storage parts 3 are shown in Fig. 17c. In Fig. 17e, the retrieval station 103 is shown. In another example, a support unit may be arranged in connection with the retrieval station and be in use to support the wagon if the retrieval station has an opening being larger than the wagon. The support unit may be a track, a ramp or similar.

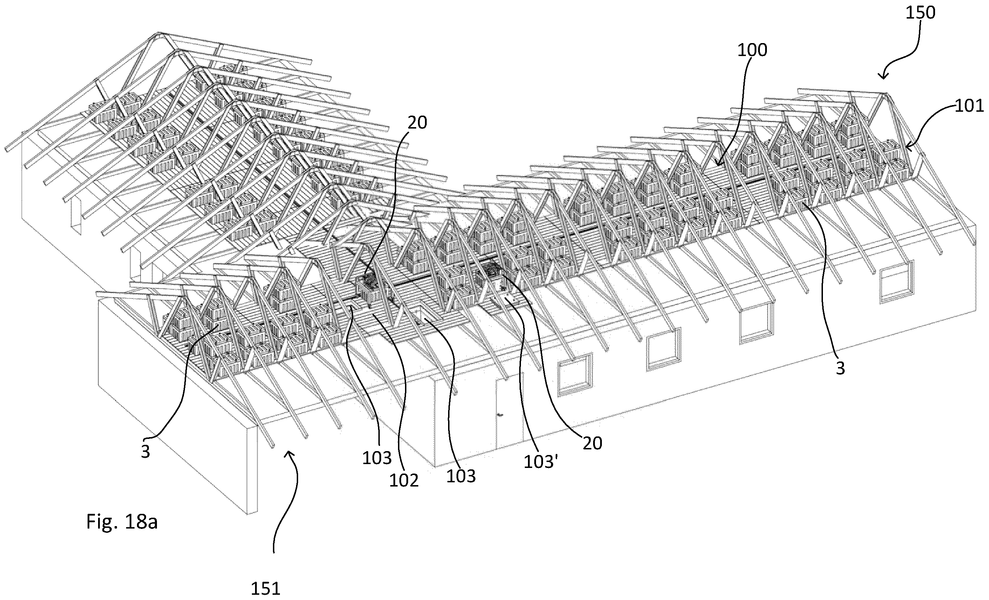

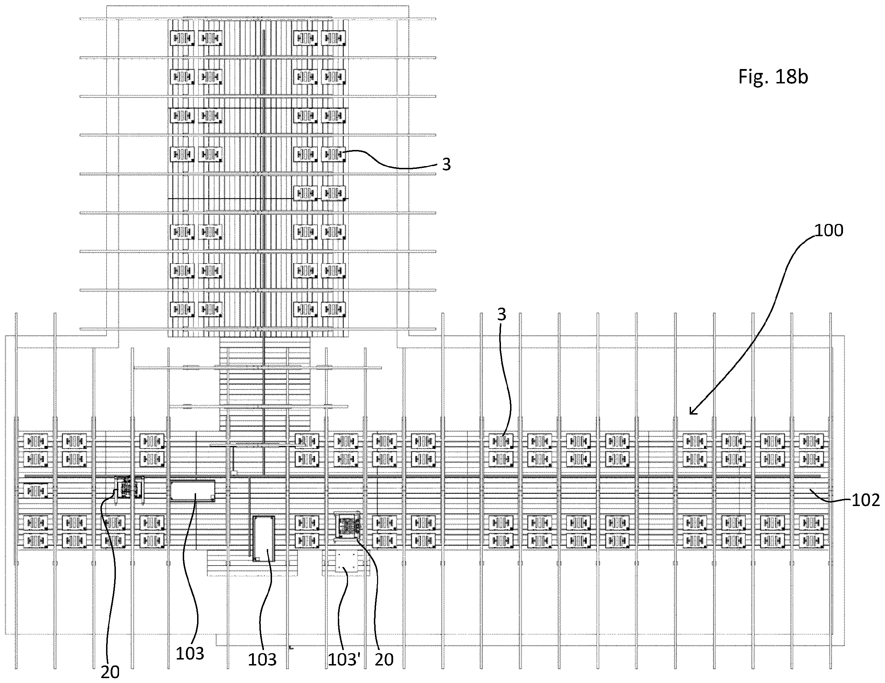

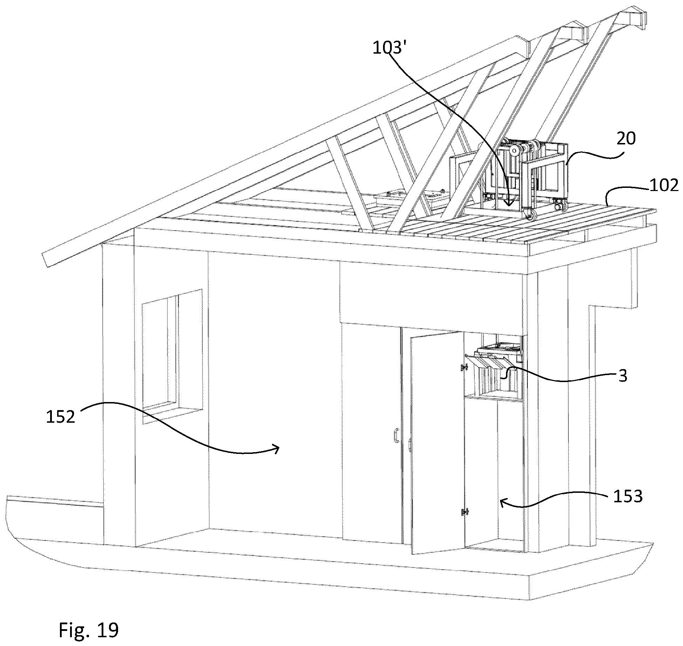

In Figs. 18a-18b, a building 150 is shown without the roof. The roof is sloping and there is limited height on the attic 101. The residential retrieval and storage system 100 is arranged in the attic 101 of the building 150. The storage parts 3 are stored on the floor 102 around the attic 101 so that the wagon 20 can move around on the floor and retrieving and positioning the storage parts 3 on demand. In the building 150 three retrieval stations 103, 103' are arranged. One of the retrieval station provide access into the building so that the wagon may hoist or lower the storage parts 3 directly into the building 150. Another retrieval station is arranged above a garage 151 so that the storage parts 3 may be hoisted or lowered from outside the building via the wagon 20. The third retrieval station 103' is also arranged so storage parts may be hoisted or lowered another place in the building. This will be further described in relation with Fig. 19 below.

In an example, the storage room is a room in the building. A technical advantage may include providing a dedicated and secure storage area, enhancing the organization and management of stored items. Also. the storage room may be a basement. A technical advantage may include providing a cool and dry storage environment, suitable for a wide range of items. In addition, the basement may be a crawl space. A technical advantage may include utilizing low-height areas, optimizing the storage capacity of the building.

The storage room may have a height, the height being lower than 2.5 meters, preferably lower than 2.0 meters. A technical advantage may include enabling the use of compact and space-efficient storage solutions, suitable for residential environments.

Also, the storage room may comprise a temperature sensor and/or a humidity sensor. A technical advantage may include monitoring and controlling environmental conditions, ensuring the optimal preservation of stored items. The temperature sensor and/or humidity sensor may be operatively connected with the control unit. A technical advantage may include enabling integrated and automated environmental control, optimizing the storage conditions.

As mentioned above, the retrieval station may be arranged in a ceiling. A technical advantage may include providing convenient and space-saving access to stored items, optimizing the use of available space.

Moreover the building is a residential home. A technical advantage may include offering a practical and efficient storage solution tailored for residential use, enhancing the convenience and organization of the household.

In Fig. 19, a room 152 in the building is shown. The room may be a kitchen having a cabinet 153. The retrieval station 103' is arranged inside the cabinet 153. A technical advantage may include integrating the storage solution with existing furniture, enhancing the aesthetic and functional aspects of the home. In addition, the cabinet may be used to retrieve different kitchen appliances and machines not being frequently used and which occupies large areas in the kitchen. By incorporating a retrieval station in the cabinet 153 it is possible to store different kitchen equipment in one or more storage parts and have the equipment delivered in the cabinet 153 on demand. By using the system according to the invention in such a manner it is possible to minimise the necessary space used to store the kitchen equipment and use this space to other purposes. The kitchen appliances and machines may be a food processor, an oven, baking machine, ice cream machine, a sui vie, a microwave oven, a food mixer, a beverage draft system, and the like.

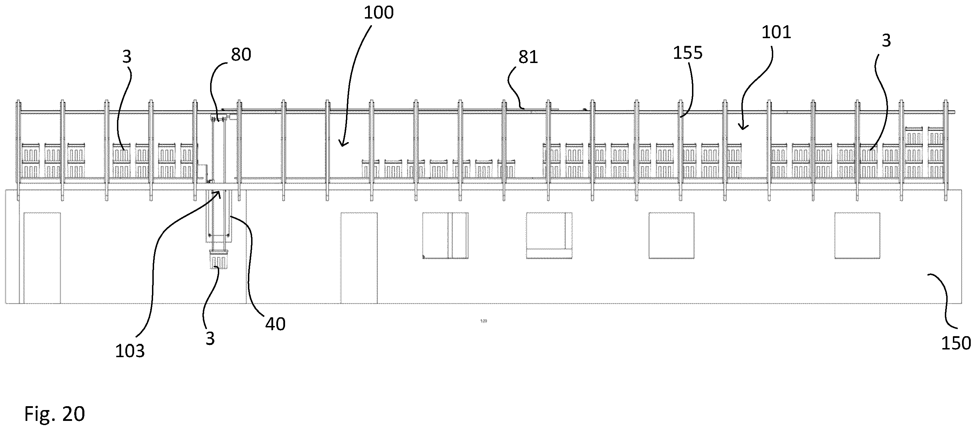

In Fig. 20, another residential retrieval and storage system 100 is shown arranged in an attic 101 of a building 150. In present embodiment, the elevation device is connected with a trolley 80. A technical advantage may include enabling horizontal movement of the elevating device, providing flexibility in accessing different storage locations. The trolley 80 is connected with an overhung rail 81 or frame. A technical advantage may include providing a stable and secure support for the trolley, ensuring smooth and controlled movement. The overhung rail 81 may be mounted to a structure arranged above, for instance the roof truss 155 of the building 150. The overhung rail 81 has a longitudinal extension. A technical advantage may include allowing the trolley to move along an extended path, accessing multiple storage locations efficiently. The trolley 80 is configured to be moved along the longitudinal extension. A technical advantage may include enabling efficient and precise positioning of the trolley, optimizing the retrieval process.

Moreover, the overhung rail is made of a metal, a composite, reinforced polymeric material, or any combination thereof. A technical advantage may include offering a robust and durable support structure, suitable for various environmental conditions.

Furthermore, the trolley 80 may comprise a plurality of trolley wheels enabling that the trolley 80 is movable along the longitudinal extension. A technical advantage may include facilitating smooth and efficient movement of the trolley, reducing friction and wear. The elevation device is arranged below or in level with the trolley wheels. A technical advantage may include optimizing the center of gravity and stability of the system, enhancing safety and performance.

Additionally, the trolley 80 may comprise a trolley motor. A technical advantage may include enabling automated movement of the trolley, reducing the need for manual intervention and increasing efficiency. The trolley motor is connected with the trolley wheels for moving the trolley along the longitudinal extension. A technical advantage may include providing a direct and efficient drive mechanism, enhancing the performance of the trolley system.

In another example, the trolley 80 is connected with an external motor, the external motor is configured to move the trolley 80 along the overhung rail 81. A technical advantage may include offering an alternative drive mechanism, providing flexibility in the design and operation of the system. The trolley and the external motor may be connected via a wire system enabling that the trolley can be moved along the overhung rail. A technical advantage may include ensuring reliable and controlled movement, reducing the risk of mechanical failure.

Moreover, the overhung rail 81 may comprise one or more overhung side rails, the overhung side rails being arranged in the same level as the overhung rail 81 with a transverse extension. A technical advantage may include enabling multidirectional movement of the trolley, enhancing the flexibility and accessibility of the system as well as the possibility to utilise a larger area for the system. A turning unit may be arranged for turning the trolley so that it may be moved from the overhung rail to the overhung side rail or vice versa. A technical advantage may include providing efficient and accurate directional changes, optimizing the retrieval process.

In an example, the turning unit may be part of the trolley or may be arranged external in connection with the overhung rail and the overhung side rail. A technical advantage may include offering flexibility in the design and installation of the turning unit, ensuring compatibility with various system configurations.

Also, the trolley may comprise a trolley sensor, the trolley sensor is configured to detect a position of the trolley along the overhung rail. A technical advantage may include providing precise and accurate positioning, enhancing the efficiency and reliability of the system. The trolley motor may be an electric motor. A technical advantage may include offering an efficient and eco-friendly power source, reducing energy consumption and environmental impact.

Furthermore, the trolley 80 may comprise a power supply, such as a rechargeable battery, or be wirely connected to an electric power source. A technical advantage may include ensuring continuous and reliable operation, reducing downtime and maintenance requirements.

A trolley charging station may be arranged in connection with the overhung rail 81 so that the trolley can be recharged. A technical advantage may include providing a convenient and efficient method for recharging the trolley, ensuring uninterrupted operation.

As seen in Fig. 20, the trolley 80 may be moved along the overhung rail 81 so that it via the interface assembly may retrieving and positioning the storage parts 3 along the overhung rail 81. As described above, a retrieval station 103 may be arranged in the ceiling of the building, so that the elevating device may hoist or lower the storage part 3 through the opening at the hatch 40.

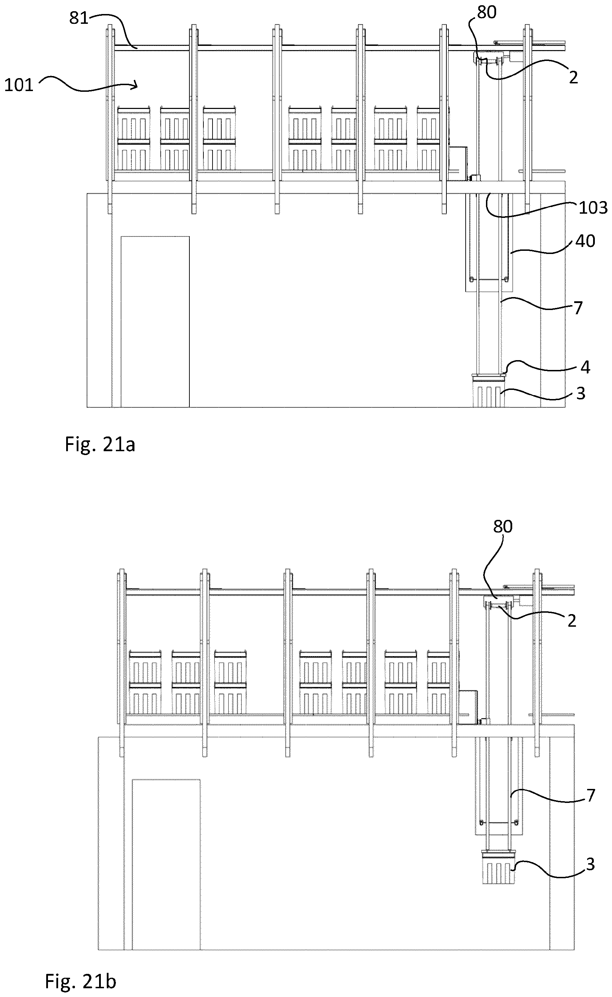

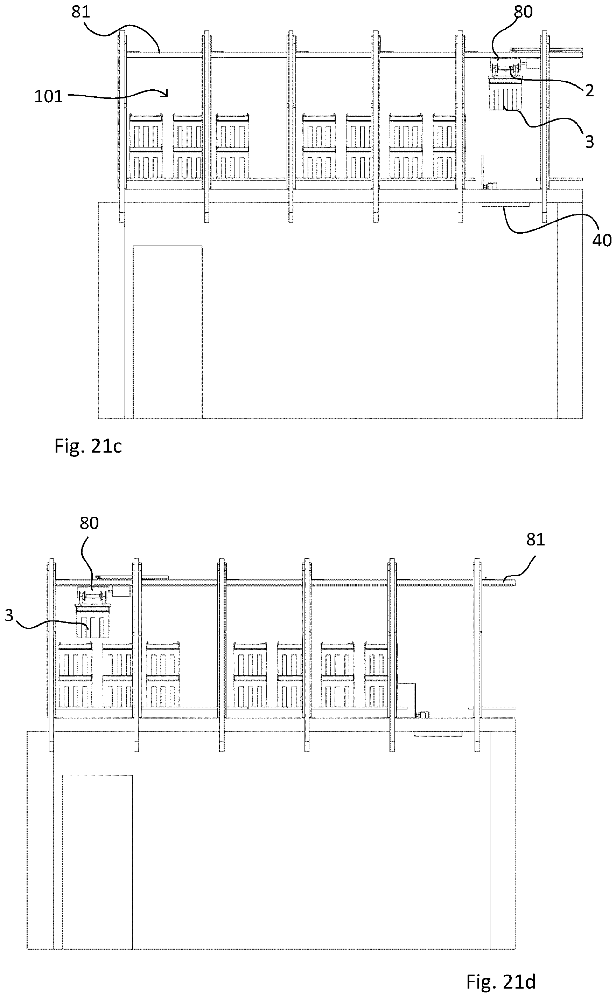

In Figs. 21a-21d, a sequence of positioning a storage part 3 is shown. In Fig. 21a, the storage part 3 is placed on a floor below the retrieval station 103. The elevating device 2 has lowered the intermediate part 4 through the opening at the hatch 40, and the locking means of the intermediate part 4 are brought into engagement with the receiving means of the storage part 3. Hereinafter the elevating device 2 is hoisting the storage part 3 upwards as seen in Fig. 21b.

When the elevating device 2 has hoisted the storage part 3 up in the attic 101, the hatch is being closed and the trolley 80 is ready to be moved along the overhung rail 81. In Fig. 21d, the trolley 80 has been moved to the left along the overhung rail 81 to a position where it may be stacked on top of other storage parts 3.

The system may further comprises an access module, the access module is operatively connected with the control unit. A technical advantage may include enabling user interaction and control, enhancing the convenience and usability of the system. The access module is configured to receive an input from an operator and to communicate with the operator. A technical advantage may include providing a user-friendly interface for managing storage and retrieval, optimizing the user experience. The input may be retrieving one or more storage parts. A technical advantage may include enabling efficient and accurate retrieval of stored items, enhancing the convenience and usability of the system.

The access module may be an app or a display, a smartphone, smartwatch, a tablet, a computer, or another similar devices. A technical advantage may include offering versatile and accessible control options, enhancing the user experience and convenience.

The access module may be used to input the content of a specific storage part and save the input so that the operator always may find the content of a specific storage part. The access module may also have a search feature whereby the operator may search for specific content and whereby the system will find which storage parts containing the searched content. The operator can then request to retrieve the specific storage part(s).

The system may also be configured to optimize the positions of the storage parts so that the storage parts being most frequently retrieved are positioned closest to a retrieval station, and less frequent retrieved storage parts are positioned longer away from the retrieval stations. The system may also be configured to positioning the storage parts by weight, for instance.

Also, the access to the access module may be controlled so that some content of the storage parts may be accessible for a number of operators and other content is not available. For instance, if a storage part content is different games, etc. this content may be made available for an external operator, such as a neighbour, whereby the neighbour may request retrieval of that specific storage part so that he or she can borrow the games in that storage part.

In other circumstances where the content in a storage part is of importance or value, it is possible to hide that content for other users of the system so that this content is unavailable and cannot be searched, unless a specific access code is used.

In addition, the system may also comprise a storage unit such as a server. A technical advantage may include providing centralized data storage and management, enhancing the efficiency and reliability of the system. The access module and the control unit is operatively connected with the storage unit. A technical advantage may include enabling seamless data integration and communication, optimizing the performance and efficiency of the system.

The present invention have many different advantages. For instance, it minimize the spatial footprint of the storage system to make it suitable for compact living spaces. Since, the invention comprises an interface assembly that includes an elevating device, a storage part, and an intermediate part. The elevating device is configured to move the intermediate part in a vertical direction, allowing the storage part to be elevated or lowered as needed. This vertical movement optimizes the use of available space, particularly in homes where floor space is limited.

Furthermore, the present invention create an intuitive and easy-to-use interface for homeowners. The system is designed with a user-centric approach, incorporating a simple and accessible interface that allows users to easily store and retrieve items. The interface can be integrated with common household devices such as smartphones or tablets, providing a seamless user experience.

Also, the system can be adapted to various home layouts and configurations. The intermediate part of the assembly features releasable locking means that engage with receiving means connected to the storage part. This design allows the system to be easily customized and installed in different vertical and horizontal configurations, making it adaptable to various types of homes, from single-level apartments to multi-story houses.

It is also possible to provide secure access to stored items, ensuring that only authorized users can retrieve them. The invention may incorporate sophisticated identification and access control mechanisms, such as RFID readers, biometric scanners, or mobile app-based authentication. These features ensure that only authorized users can access the storage parts, thereby enhancing security in shared living environments.

It is furthermore possible to reduce the complexity and frequency of maintenance required for the system. The present design focuses on robustness and reliability, utilizing durable materials and components that require minimal upkeep. The system's modular design also allows for easy replacement of individual parts, further simplifying maintenance.

In addition, the modular and adaptable design allows for installation in various configurations, making it suitable for different types of homes. This flexibility is a significant improvement over prior systems, which are typically rigid and difficult to adapt to different environments.

The sleek and modern design of the system allows it to blend seamlessly with home interiors, unlike the industrial appearance of prior art systems. This aesthetic consideration is crucial for residential adoption.

In summary, this invention offers a superior solution for automated storage and retrieval in domestic settings by addressing the specific needs and challenges of home environments. Its compact, user-friendly, adaptable, secure, and low-maintenance design makes it a practical and efficient choice for optimizing storage in residential spaces, setting it apart from existing technologies.

Certain aspects and variants of the invention are set forth in the following clauses numbered consecutive below.
Clause 1. An interface assembly (1) for a residential storage and retrieval system (100), comprising
   an elevating device (2),
   a storage part (3), and
   an intermediate part (4) being connected with the elevating device,
   the elevating device (2) being configured to elevate the intermediate part (4) in a vertical direction, the intermediate part (4) comprising releasable locking means (5), the locking means (5) being configured to releasable engage receiving means (6) connected with the storage part (3) whereby the elevating device (2) via the intermediate part (4) can move the storage part (3) in the vertical direction.
Clause 2. The interface assembly (1) of clause 1, wherein the intermediate part (4) comprises a plurality of locking means (5).
Clause 3. The interface assembly (1) of any of the preceding clauses, wherein the intermediate part (4) comprises a frame structure (8).
Clause 4. The interface assembly (1) of Clause 3, wherein the frame structure (8) is square-formed.
Clause 5. The interface assembly (1) of any of Clauses 3 and/or 4, wherein the frame structure (8) is made of metal or a composite or any combination thereof.
Clause 6. The interface assembly (1) of any of the preceding Clauses, wherein a locking means (5) is arranged at each corner of the square-formed frame structure.
Clause 7. The interface assembly (1) of any of the preceding Clauses, wherein the locking means (5) comprises a mechanical locking means, a magnetic locking means, a vacuum locking means, or any combination thereof.
Clause 8. The interface assembly of any of the preceding Clauses, wherein the locking means (5) comprises a pin (9) configured to be movable inserted into the receiving means (6).
Clause 9. The interface assembly (1) of Clause 8, wherein the pin (9) is moved by an actuator (10), a motor, a lever arm, a gear system, or a cylinder.
Clause 10. The interface assembly (1) of any of the preceding Clauses, wherein the intermediate part (4) comprises one or more connection points for one or more hoisting lines.
Clause 11. The interface assembly (1) of any of the preceding Clauses, wherein the storage part (3) is a box having an internal volume.
Clause 12. The interface assembly (1) of Clause 11, wherein the box has a lid closing off the internal volume.
Clause 13. The interface assembly (1) of any of the Clauses 1-9, wherein the storage part (3) is a tray.
Clause 14. The interface assembly (1) of any of the preceding Clauses, wherein the receiving means (6) are connected with the storage part (3).
Clause 15. The interface assembly (1) of any of the preceding Clauses, wherein a plurality of receiving means (6) are connected with the storage part (3).
Clause 16. The interface assembly (1) of any of the preceding Clauses, wherein the number of receiving means (6) equal the number of locking means (5).
Clause 17. The interface assembly (1) of any of the preceding Clauses, wherein the receiving means (6) is an opening.
Clause 18. The interface assembly (1) of any of the preceding Clauses, wherein the receiving means (6) are directly connected with the storage part (3).
Clause 19. The interface assembly (1) of any of the Clauses 1-16, wherein the receiving means (6) are embedded into the storage part (3).
Clause 20. The interface assembly (1) of any of the preceding Clauses, wherein the receiving means (6) are projecting in an upwards direction in relation to the storage part (3).
Clause 21. The interface assembly (1) of any of the preceding Clauses, wherein the storage part (3) is made of a polymeric material, a metal, a composite, a cardboard, or any combination thereof.
Clause 22. The interface assembly (1) of any of the preceding Clauses, wherein the storage part (3) comprises an identification unit (31), such as a RFID tag, a chip, a barcode, such as a QR code, or similar.
Clause 23. The interface assembly (1) of any of the preceding Clauses, wherein the storage part (3) comprises a projecting area or sign.
Clause 24. The interface assembly (1) of any of the preceding Clauses, wherein the intermediate part (4) comprises one or more part sensor(s) for detecting a distance to the storage part (3) and/or a position of the intermediate part in relation to the storage part.
Clause 25. The interface assembly (1) of any of the preceding Clauses, wherein the storage part (3) is isolated.
Clause 26. The interface assembly (1) of any of the preceding Clauses, wherein the storage part (3) comprises a vent opening.
Clause 27. The interface assembly (1) of any of the preceding Clauses, wherein the storage part (3) comprises a device for controlling parameters of the internal volume.
Clause 28. The interface assembly (1) of Clause 27, wherein the parameters are humidity, temperature, pressure or similar.
Clause 29. The interface assembly (1) of any of the preceding Clauses, wherein the elevating device (2) comprises one or more motor(s) (22).
Clause 30. The interface assembly (1) of Clause 29, wherein the motor(s) is/are configured to rotate one or more pulleys (21).
Clause 31. The interface assembly (1) of any of the preceding Clauses, wherein the hoisting lines (7) extend from the pulleys (21) to the connection points of the intermediate part.
Clause 32. The interface assembly (1) of Clause 31, wherein the hoisting lines (7) are wires, ropes, belts, webbings or the like.
Clause 33. The interface assembly (1) of Clause 30, wherein the pulleys (21) has a straight configuration or a conical configuration.
Clause 34. The interface assembly (1) of any of the preceding Clauses, wherein the elevating device (2) comprises a load sensor for detecting a load of the storage part.
Clause 35. The interface assembly (1) of Clause 34, wherein the load sensor is configured to detect if the load is larger than a predetermined load.
Clause 36. The interface assembly (1) of Clause 35, wherein the predetermined load is 500 kg, 250 kg, 200 kg, 100 kg, or lower.
Clause 37. The interface assembly (1) of Clause 29, wherein the one or more motors (22) is/are electric motors.
Clause 38. The interface assembly (1) of any of the preceding Clauses, wherein the elevating device (2) comprises one or more device sensor(s) for detecting a distance to the storage part (3) and/or a position of the intermediate part in relation to the storage part.
Clause 39. A residential storage and retrieval system (100) comprising the interface assembly (1) of any of the preceding Clauses.
Clause 40. The residential storage and retrieval system (100) of Clause 39, wherein the elevation device (2) is connected with a trolley (80).
Clause 41. The residential storage and retrieval system (100) of Clause 40, wherein the trolley (80) is connected with an overhung rail (81) or frame.
Clause 42. The residential storage and retrieval system (100) of Clause 41, wherein the overhung rail (81) has a longitudinal extension.
Clause 43. The residential storage and retrieval system (100) of Clause 42, wherein the trolley (80) is configured to be moved along the longitudinal extension.
Clause 44. The residential storage and retrieval system (100) of Clause 41, wherein the overhung rail (81) is made of a metal, a composite, reinforced polymeric material, or any combination thereof.
Clause 45. The residential storage and retrieval system (100) of any of the Clauses 41-44, wherein the overhung rail (81) is mounted to a structure arranged above the overhung rail.
Clause 46. The residential storage and retrieval system (100) of any of the Clauses 40-45, wherein the trolley (80) comprises a plurality of trolley wheels enabling that the trolley is movable along the longitudinal extension.
Clause 47. The residential storage and retrieval system (100) of any of the Clauses 40-46, wherein the elevation device (2) is arranged below or in level with the trolley wheels.
Clause 48. The residential storage and retrieval system (100) of any of the Clauses 40-47, wherein the trolley (80) comprises a trolley motor.
Clause 49. The residential storage and retrieval system (100) of Clause 48, wherein the trolley motor is connected with the trolley wheels for moving the trolley along the longitudinal extension.
Clause 50. The residential storage and retrieval system (100) of any of the Clauses 40-47, wherein the trolley (80) is connected with an external motor, the external motor is configured to move the trolley along the overhung rail.
Clause 51. The residential storage and retrieval system (100) of Clause 50, wherein the trolley (80) and the external motor is connected via a wire system enabling that the trolley can be moved along the overhung rail (81).
Clause 52. The residential storage and retrieval system (100) of any of the Clauses 40-51, wherein the overhung rail (81) comprises one or more overhung side rails, the overhung side rails being arranged in the same level as the overhung rail with a transverse extension.
Clause 53. The residential storage and retrieval system (100) of Clause 52, wherein a turning unit is arranged for turning the trolley so that it may be moved from the overhung rail to the overhung side rail or vice versa.
Clause 54. The residential storage and retrieval system (100) of Clause 53, wherein the turning unit is part of the trolley or is arranged external in connection with the overhung rail and the overhung side rail.
Clause 55. The residential storage and retrieval system (100) of any of the Clauses 40-54, wherein the trolley (80) comprises a trolley sensor, the trolley sensor is configured to detect a position of the trolley along the overhung rail.
Clause 56. The residential storage and retrieval system (100) of any of the Clauses 40-55, wherein the trolley motor is an electric motor.
Clause 57. The residential storage and retrieval system (100) of any of the Clauses 40-56, wherein the trolley (80) comprises a power supply, such as a rechargeable battery.
Clause 58. The residential storage and retrieval system (100) of Clause 57, wherein a trolley charging station is arranged in connection with the overhung rail so that the trolley can be recharged.
Clause 59. The residential storage and retrieval system (100) of Clause 39, wherein the elevation device (2) is connected with a wagon (20).
Clause 60. The residential storage and retrieval system (100) of Clause 59, wherein the wagon (20) comprises a chassis (23) connected with at least three legs (24).
Clause 61. The residential storage and retrieval system (100) of Clause 60, wherein the chassis (23) comprises a frame wagon structure (25) configured to carry the elevation device (2).
Clause 62. The residential storage and retrieval system (100) of Clause 60, wherein the legs (24) have a height, the height being lower than 1.5 meter.
Clause 63. The residential storage and retrieval system (100) of any of the Clauses 60-62, wherein each leg (24) is connected with a wagon wheel (26).
Clause 64. The residential storage and retrieval system (100) of Clause 63, wherein at least one wagon wheel (26) is configured to be driveable by a wagon motor (27).
Clause 65. The residential storage and retrieval system (100) of Clause 64, wherein two or more wagon wheels (26) are driveable.
Clause 66. The residential storage and retrieval system (100) of any of the Clauses 59-65, wherein the wagon (20) is an autonomous wagon.
Clause 67. The residential storage and retrieval system (100) of any of the Clauses 59-66, wherein the wagon (20) is configured to be moved along a path and/or is configured to be moved and/or turned in any direction in a horizontal plane.
Clause 68. The residential storage and retrieval system (100) of any of the Clauses 59-67, wherein the elevating device (2) is arranged above the wagon wheels (26).
Clause 69. The residential storage and retrieval system (100) of any of the Clauses 59-68, wherein the elevation device (2) is movable arranged to the wagon (20) so that the elevation device (2) can be moved in a vertical direction in relation to the chassis (23).
Clause 70. The residential storage and retrieval system (100) of Clause 69, wherein the wagon (20) comprises a lifting unit (28) configured to lift and lower the elevation device (2) so that a storage part (3) can be lifted/lowered together with the elevation device (2).
Clause 71. The residential storage and retrieval system (100) of Clause 70, wherein the lifting unit (28) comprises an unit motor, a toothed gearing system, a hydraulic cylinder, a pneumatic cylinder, a belt drive or the like.
Clause 72. The residential storage and retrieval system (100) of any of the Clauses 59-71, wherein the wagon (20) comprises a wagon sensor (32), the wagon sensor is configured to detect a position of the wagon.
Clause 73. The residential storage and retrieval system (100) of Clause 72, wherein the wagon sensor (32) is an imagining sensor, such a camera, or a LiDAR sensor.
Clause 74. The residential storage and retrieval system (100) of any of the Clauses 59-73, wherein the wagon motor (27) and the unit motor is an electric motor.
Clause 75. The residential storage and retrieval system (100) of any of the Clauses 59-74, wherein the wagon (20) comprises a power supply, such as a rechargeable battery (33).
Clause 76. The residential storage and retrieval system (100) of Clause 75, wherein a wagon charging station (104) is arranged so that the wagon can be recharged. Clause 77. The residential storage and retrieval system (100) of any of Clauses 39-76, further comprising a control unit.
Clause 78. The residential storage and retrieval system (100) of Clause 77, wherein the control unit is operatively connected with the elevating device, the storage part, the locking means, any of the sensors, or any of the motors.
Clause 79. The residential storage and retrieval system (100) of any of the Clauses 77-78, further comprises an access module, the access module is operatively connected with the control unit.
Clause 80. The residential storage and retrieval system (100) of Clause 79, wherein the access module is configured to receive an input from an operator and to communicate with the operator.
Clause 81. The residential storage and retrieval system (100) of Clause 80, wherein the input is retrieving one or more storage parts.
Clause 82. The residential storage and retrieval system (100) of Clause 79, wherein the access module is an app or a display, a smartphone, or a tablet.
Clause 83. The residential storage and retrieval system (100) of any of the Clauses 39-82, further comprises a storage unit such as a server.
Clause 84. The residential storage and retrieval system (100) of Clause 83, wherein the access module and the control unit is operatively connected with the storage unit.
Clause 85. The residential storage and retrieval system (100) of any of Clauses 39-84, further comprising one or more retrieval stations (103).
Clause 86. The residential storage and retrieval system (100) of Clause 85, wherein the retrieval station comprises a hatch (40,40').
Clause 87. The residential storage and retrieval system (100) of Clause 86, wherein the hatch (40, 40') is connected with a hatch motor (43), the hatch motor (43) is configured to move the hatch between an open position and a closed position.
Clause 88. The residential storage and retrieval system (100) of Clause 86, wherein the hatch (40,40') comprises hatch receiving means (6'), the releasable locking means (5) being configured to engage the hatch receiving means (6') whereby the elevating device (2) can open and close the hatch.
Clause 89. A building (150) having a storage room comprising the residential storage and retrieval system (100) of any of the Clauses 39-88.
Clause 90. The building (150) of Clause 89, wherein the storage room is a room in the building.
Clause 91. The building (150) of Clause 90, wherein the storage room is an attic (101).
Clause 92. The building (150) of Clause 90, wherein the storage room is a basement.
Clause 93. The building (150) of Clause 92, wherein the basement is a crawl space.
Clause 94. The building (150) of any of the Clauses 89-93, wherein the storage room has a height, the height being lower than 2.5 meters, preferably lower than 2.0 meters.
Clause 95. The building (150) of any of the Clauses 89-94, wherein the storage room comprises a temperature sensor and/or a humidity sensor.
Clause 96. The building (150) of Clause 95, wherein the temperature sensor and/or humidity sensor is operatively connected with the control unit.
Clause 97. The building (150) of any of the Clauses 89-96, wherein the retrieval station (103) is arranged in a ceiling.
Clause 98. The building (150) of any of the Clauses 89-97, wherein the retrieval station (103) is arranged in a cabinet (153).
Clause 99. The building (150) of any of the Clauses 89-98, wherein the building is a residential home.
Clause 100. The building (150) of any of the Clauses 89-99, wherein a roof of the building has a slope.
Clause 101. The building (150) of Clause 91, wherein the attic (101) has limited height.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the system and/or device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An interface assembly (1) for a residential storage and retrieval system (100), comprising
an elevating device (2),
a storage part (3), and
an intermediate part (4) being connected with the elevating device,
the elevating device (2) being configured to elevate the intermediate part (4) in a vertical direction, the intermediate part (4) comprising releasable locking means (5), the locking means (5) being configured to releasable engage receiving means (6) connected with the storage part (3) whereby the elevating device (2) via the intermediate part (4) can move the storage part (3) in the vertical direction.

2. The interface assembly (1) of claim 1, wherein the intermediate part (4) comprises a plurality of locking means (5).

3. The interface assembly of any of the preceding claims, wherein the locking means (5) comprises a pin (9) configured to be movable inserted into the receiving means (6).

4. The interface assembly (1) of claim 3, wherein the pin (9) is moved by an actuator (10), a motor, a lever arm, a gear system, or a cylinder.

5. The interface assembly (1) of any of the preceding claims, wherein the storage part (3) comprises an identification unit (31), such as a RFID tag, a chip, a barcode, such as a QR code, or similar.

6. A residential storage and retrieval system (100) comprising the interface assembly (1) of any of the preceding claims.

7. The residential storage and retrieval system (100) of claim 6, wherein the elevation device (2) is connected with a wagon (20).

8. The residential storage and retrieval system (100) of any of the claims 6-7, wherein the wagon has legs (24), each leg (24) is connected with a wagon wheel (26).

9. The residential storage and retrieval system (100) of claim 8, wherein at least one wagon wheel (26) is configured to be driveable by a wagon motor (27).

10. The residential storage and retrieval system (100) of any of the claims 6-9, wherein the elevation device (2) is movable arranged to the wagon (20) so that the elevation device (2) can be moved in a vertical direction in relation to the chassis (23).

11. The residential storage and retrieval system (100) of claim 10, wherein the wagon (20) comprises a lifting unit (28) configured to lift and lower the elevation device (2) so that a storage part (3) can be lifted/lowered together with the elevation device (2).

12. The residential storage and retrieval system (100) of any of claims 6-11, further comprising a control unit.

13. The residential storage and retrieval system (100) of any of the claims 6-12, further comprises an access module, the access module is operatively connected with the control unit.

14. The residential storage and retrieval system (100) of any of claims 6-13, further comprising one or more retrieval stations (103).

15. A building (150) having a storage room comprising the residential storage and retrieval system (100) of any of the claims 6-14.
